# FASCICULE DE BREVET EUROPEEN

(11) **EP 0 519 839 B1**
(45) Date de publication et mention de la délivrance du brevet: **05.02.1997**
(21) Numéro de dépôt: 92401734.6
(22) Date de dépôt: 19.06.1992
(51) Int. Cl.: A01B 3/46, A01B 51/02

(54) **Perfectionnement aux machines agricoles du type charrues semi-portées, munies d'un dispositif d'assistance d'entraînement**
Verbesserung für landwirtschaftliche Maschinen wie Aufsattelpflüge mit einer Hilfsantriebsvorrichtung
Improvement to agricultural machines such as semi-mounted ploughs having an auxiliairy drive unit

(30) Priorité: 21.06.1991 FR 9107826
(43) Date de publication de la demande: 23.12.1992
(73) Titulaire: CHARRUES NAUD, 49600 Andreze (FR)
(72) Inventeur: Naud, Bernard, F-49600 Andreze (FR); Poncin, Richard, F-49280 La Seguiniere (FR)
(74) Mandataire: Phélip, Bruno

(56) Documents cités:
- EP-A- 0 313 415
- AT-B- 301 230
- DE-A- 2 506 597
- FR-A- 2 270 771
- POWER FARMING (INC. AGRICULTURAL MACHINERY JOURNAL). vol. 66, no. 11, Novembre 1987, SUTTON GB pages 18 - 19 J. GIBSON 'A power yoke is no joke.'

## Description

La présente invention concerne une machine agricole du type charrue semi-portée, munie d'un dispositif d'assistance d'entraînement utilisé pour compléter l'action du tracteur auquel est normalement attelée cette machine.

L'emploi de charrues de grande longueur se généralise pour les parcelles de très grande superficie, ces charrues permettent en effet de réduire de façon notable le nombre de passages sur le terrain.

Cependant, lorsque les conditions de travail sont difficiles en raison de l'humidité par exemple, les tracteurs conventionnels atteignent rapidement leur limite d'adhérence.

Le document FR-A-2 270 771 propose une motorisation auxiliaire pour charrue au moyen d'un moteur-roue hydraulique situé à l'arrière du bâti. Cette charrue est équipée d'une centrale hydraulique comprenant une pompe entraînée par la prise de force du tracteur, une valve de détente qui établit la pression dans le circuit et une valve de distribution actionnée par le conducteur du tracteur, pour alimenter le moteur hydraulique.

Ce document présente un dispositif d'assistance au moyen d'une mono-roue disposée à l'arrière du bâti.

Il est également connu, par le document FR-A-2 174 985, de motoriser les roues d'une charrue semi-portée comportant un chariot disposé sensiblement à mi-longueur du bâti. Dans ce document, il est simplement précisé que le dispositif d'entraînement de l'arbre des roues du chariot s'effectue au moyen d'une transmission à partir de la prise de force du tracteur ou par moteur hydraulique.

On connaît également, par le document FR-A-2 580 454, un système permettant d'adapter une motricité à un porte-outil agricole. Le tracteur transmet un mouvement moteur à l'outil au moyen d'une prise de force dont le mouvement est proportionnel à l'avancement du tracteur.

La présente invention propose de perfectionner ce type de machine agricole qui comporte une motorisation auxiliaire utilisant un ou plusieurs moteurs-roues hydrauliques, comme décrit dans le document AT-B-301 230.

Ces perfectionnements ont principalement pour but de soulager le travail de l'opérateur par l'utilisation d'automatismes qui, de plus, permettent d'améliorer la sécurité sur ces machines et leur efficacité.

Pour les charrues, par exemple, l'assistance à l'entraînement n'est utile que pendant la phase active de labour, c'est-à-dire lorsque les socs sont en terre. Lorsque la charrue est en position inactive de labour, l'assistance peut constituer un danger. La machine décrite dans le document AT-B-301 230 comporte une centrale hydraulique dont la pompe est actionnée par la prise de force du tracteur et un dispositif d'assistance constitué d'un moteur-roue hydraulique alimenté par un organe distributeur soumis à des moyens de commande. Ces moyens de commande sont eux-mêmes constitués d'une tringlerie interposée entre le distributeur et les moyens de manoeuvre du bras de la roue support de la charrue.

L'invention propose des moyens de commande du dispositif d'assistance constitués d'un dispositif électrique de commande qui met en oeuvre l'électrovanne d'alimentation du moteur-roue à partir d'informations provenant d'un capteur qui est disposé de préférence sur le support moteur-roue et qui est sensible à la position des socs de la charrue par rapport au sol.

Ce capteur est de préférence un capteur de type digital ou analogique situé au niveau du support du moteur-roue. L'utilisation d'un capteur analogique permet de disposer d'informations de distance, de position ou de profondeur, exploitables pour la conduite de l'opération de labour par exemple.

D'une manière générale, la machine comporte des moyens permettent de faire varier le débit et la pression fournis par la pompe, et des moyens pour ajuster ces débit-presssion, en fonction des ordres de l'utilisateur et/ou d'un dispositif de commande qui tient compte de paramètres dépendant du comportement de l'ensemble tracteur-machine comme par exemple, les efforts au niveau de la liaison tracteur-machine, la vitesse d'avancement par rapport au sol dudit ensemble, les vitesses des roues du tracteur et de la machine.

Toujours selon l'invention, la machine comporte au moins un capteur de transmission des efforts qui s'appliquent à la liaison tracteur-machine, dont les informations sont transmises à un dispositif de commande approprié, lequel dispositif, en fonction du niveau de l'effort comparé par exemple à trois plages d'efforts prédéfinies par l'utilisateur, comporte des moyens de commande pour : d'une part, mettre en oeuvre la fonction d'assistance lorsque le tracteur exerce un effort se situant à un niveau insuffisant pour faire progresser la machine, d'autre part, moduler la fonction d'assistance lorsque le tracteur exerce un effort se situant à un niveau suffisant pour faire progresser ladite machine, d'autre part encore, annuler ladite fonction d'assistance lorsque le tracteur exerce un effort de traction inférieur à un seuil pré-établi ou qu'il exerce un effort nul, voire que le tracteur est propulsé par ladite machine.

Toujours selon l'invention, la machine peut comporter, associés au dispositif de commande précité, des moyens de contrôle de la vitesse réelle d'avancement de l'ensemble tracteur-machine, de façon à corriger le pourcentage d'écart entre une vitesse affichée par l'utilisateur, servant de référence, et la vitesse réelle dudit ensemble, ces moyens de contrôle étant constitués d'un système radar embarqué sur ledit ensemble, sur le tracteur ou sur la charrue.

L'invention propose également; pour une machine du type charrue semi-portée comportant un chariot disposé sur la longueur du bâti, un système qui permet de contrôler la vitesse de rotation des roues de façon à éviter le patinage.

Selon l'invention, chaque moteur-roue hydraulique est alimenté au moyen d'une électro-vanne du type proportionnelle. Ces électro-vannes sont soumises au dispositif de commande qui, par un réglage de leur tension d'alimentation, module le taux d'assistance sur une plage qui peut s'étendre de 0 à 100 %.

Les électro-vannes sont également, selon l'invention, soumises à un système d'antipatinage. Ce système d'antipatinage s'apparente à un système de blocage de différentiel sur un essieu de véhicule quelconque dont les roues sont indépendantes.

La présence d'un arbre unique de liaison entre les deux roues du chariot, comme prévu dans le document précité FR-A-2 174 985, résout ce problème de patinage, mais il en pose d'autres du fait de la position de cet arbre qui est particulièrement vulnérable.

Selon l'invention, le système antipatinage comporte des moyens pour ajuster la vitesse des deux moteurs en prenant comme référence la vitesse de la roue la plus lente. Ce système d'antipatinage agit sur l'une ou l'autre des électro-vannes d'alimentation des moteurs roues, en fonction d'informations fournies par des capteurs de vitesse associés auxdites roues.

Pour coordonner les vitesses des deux roues, le système antipatinage comprend des moteurs hydrauliques du type à deux étages moteurs. L'un des étages moteurs d'une roue peut être couplé hydrauliquement en série, avec l'étage moteur correspondant de l'autre roue.

Selon un autre mode de réalisation, le système antipatinage utilise un circuit électronique qui comprend deux lignes d'analyse et de traitement des signaux provenant des capteurs de vitesse des moteurs-roues. Ces lignes d'analyse et de traitement sont de type croisé c'est-à-dire que la ligne qui analyse le signal provenant du capteur de l'une des roues agit sur l'électro-vanne d'alimentation du moteur de l'autre roue.

Toujours selon l'invention, la machine comporte des moyens qui permettent de réaliser une assistance au freinage par un contrôle d'électro-vannes disposées sur le circuit retour des moteurs-roues hydrauliques.

Selon une autre possibilité de l'invention, la centrale hydraulique montée sur la charrue est utilisée pour mettre en service des organes auxiliaires servant à la manoeuvre de la charrue comme par exemple le ou les vérins de retournement dans le cas d'une charrue réversible, de déplacement latéral du bâti ou encore de relevage du bâti.

L'invention sera encore illustrée par la description suivante et les dessins annexés donnés à titre indicatif, et dans lesquels :
- la figure 1 est une vue schématique d'une machine agricole du type ensemble de labour ;
- la figure 2 illustre l'installation de la centrale hydraulique sur la tête d'attelage de la charrue arrière ;
- la figure 3 illustre le chariot d'une charrue semi-portée, réversible, de grande longueur ;
- la figure 4 représente de façon schématique, sous forme d'un tableau synoptique, l'ensemble des éléments de la motorisation auxiliaire ;
- la figure 5 illustre de façon schématique les composants du système antipatinage.

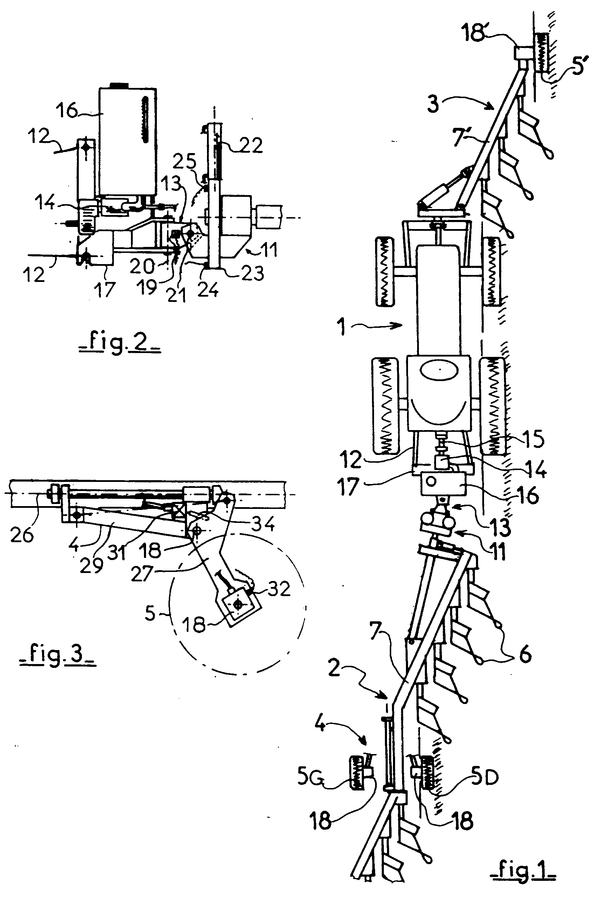

On a représenté, figure 1, un ensemble de labour comprenant un tracteur 1 auquel sont attelées une charrue arrière 2 et, à l'avant, une charrue poussée 3.

Cet ensemble de labour peut, selon les conditions, fonctionner avec la seule charrue arrière 2 ou la seule charrue avant 3.

La charrue arrière 2 est une charrue du type réversible semi-portée. Elle comporte un chariot 4 muni d'une roue droite 5d et d'une roue gauche 5g, disposé sur la longueur du bâti 7. Cette charrue s'apparente à celle qui est décrite dans le document FR-A-2 623 686.

L'avant-train 11 qui comprend le système de retournement, est relié au système de relevage 12 du tracteur par l'intermédiaire d'un joint 13 du type cardan comportant un axe horizontal et un axe vertical. Entre le système de relevage 12 du tracteur et le joint 13, on trouve les moyens qui permettent de transférer une partie de la puissance du tracteur vers le chariot 4 de la charrue.

Ces moyens de transfert de puissance consistent en une centrale hydraulique comprenant une pompe hydraulique 14 reliée à la prise de force du tracteur par un arbre 15. Cette pompe 14, du type à débit variable, est alimentée par gravité au moyen d'un réservoir 16 soutenu par le berceau de liaison 17 installé entre le système de relevage 12 et le joint 13.

La motorisation auxiliaire, au niveau du chariot 4, est obtenue au moyen de moteurs hydrauliques 18 qui entraînent directement les roues 5.

La charrue avant 3 telle que représentée figure 1 comporte à l'extrémité avant du bâti 7′ une roue 5′. La motorisation de cette roue est assurée au moyen d'un moteur hydraulique 18' alimenté par la centrale hydraulique et en particulier par la pompe 14.

On a représenté figure 2, plus en détail, la tête d'attelage de la charrue arrière 2 et les moyens de transfert de la puissance du tracteur à cette charrue arrière. On remarque le berceau 17 qui est relié au bras 12 constituant le sytème d'attelage. Ce berceau 17 supporte la pompe hydraulique 14 qui est entraînée directement ou par l'intermédiaire d'un boîtier multiplicateur, par la prise de force du tracteur. Ce berceau 17 soutient également le réservoir d'alimentation 16 de la pompe, situé au-dessus de cette dernière.

Le berceau 17 est relié à l'avant-train 11 de la charrue au moyen d'un joint 13 formant une sorte de cardan qui comporte un axe vertical 19 au niveau du berceau 17 et un axe horizontal 20 au niveau de l'avant-train 11. Ainsi, la charrue et en particulier la position de ses corps 6, est assujettie à la position du tracteur. On remarque, sur le joint 13, un capteur 21 du type jauge de contrainte ou analogue, dont le rôle est de mesurer les efforts qui s'exercent entre le tracteur 1 et la charrue 2.

L'avant-train 11 de la charrue 2 comporte un dispositif de retournement constitué, comme décrit dans le document précité FR-A-2 623 686, de deux vérins 22 qui, au moyen de crémaillères, entraînent un pignon disposé à l'extrémité avant du bâti 7.
On remarque, figure 2, positionnés sur le carter 23 qui est situé dans le prolongement du vérin 22, des capteurs 24 et 25, positionnés respectivement en bas et en haut dudit carter. Ces capteurs 24 et 25 permettent de donner des indications sur la position des corps de labour à droite ou à gauche, par détection de la position de la crémaillère qui commande le retournement de la charrue. Ces informations sont utilisables pour effectuer un retournement automatique de la charrue par un système approprié.

On, a représenté, figure 3, vue de côté, le chariot 4 qui supporte la charrue entre les portions avant et arrière du bâti 7. Ce chariot est articulé autour d'un axe 26, qui, en position normale de travail de la charrue, est situé dans un plan vertical parallèle au sens d'avancement de la charrue. Les roues 5 du chariot 4 sont montées sur un étrier 27 qui est monté pivotant autour d'un axe 28. Cet axe 28 est disposé à la partie arrière d'un cadre support 29 qui est articulé sur l'axe 26. Un vérin,matérialisé par son axe 30, est interposé entre le cadre 29 et l'étrier 27 pour faire varier la position de la charrue par rapport au sol.

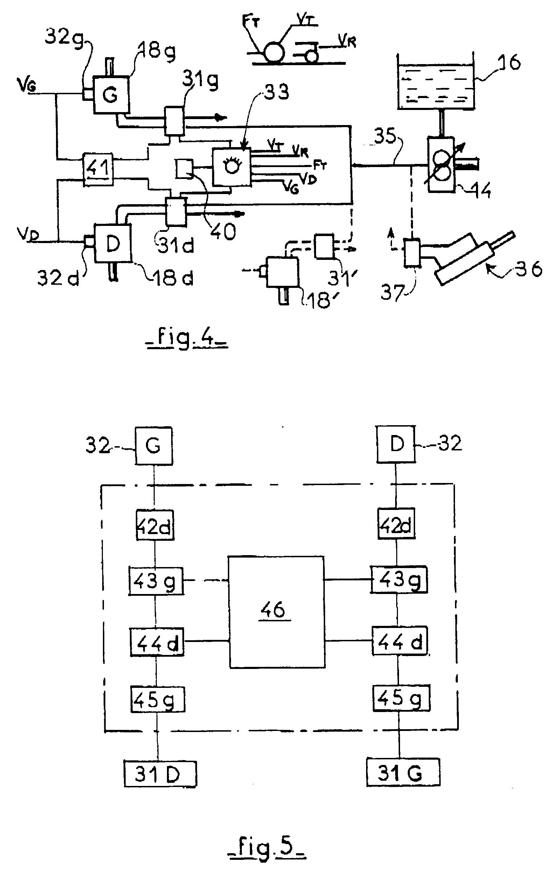

Les moteurs hydrauliques 18 sont positionnés à l'extrémité inférieure des branches de l'étrier 27, formant directement le moyeu des roues 5. Chaque moteur-roue hydraulique 18 est alimenté à travers un organe distributeur 31 du type électro-vanne proportionnelle qui, figure 3, est positionné sur le chariot 4. Des capteurs 32 sont installés sur les moteurs-roues hydrauliques 18 des roues 5d et 5g et les informations de vitesse sont transmises à un dispositif de commande 33 représenté figure 4 sur le schéma synoptique.

Un capteur 34, de type digital ou analogique, est interposé entre l'étrier 27 et le cadre 29 qui supporte ledit étrier. Ce capteur 34 constitue un organe de sécurité qui permet, à travers le dispositif de commande 33, de supprimer l'assistance d'entraînement, lorsque la charrue est inactive c'est-à-dire lorsqu'elle n'est pas en position de labour, avec les socs en terre. L'utilisation d'un capteur de type analogique permet de disposer d'informations sur la distance des socs par rapport au sol ou sur la profondeur de terrage. Ces informations sont utilisables pour améliorer ou faciliter la conduite des opérations de labour.

Le dispositif de commande 33, est de préférence installé sur le tracteur 1. Il peut permettre à l'opérateur de choisir le degré d'assistance souhaité lors de l'opération de labour. Ce dispositif de commande reçoit des informations provenant des moteurs hydrauliques 18 et en particulier des informations provenant des capteurs 32, concernant le nombre de tours ou la vitesse VD, VG, des roues droite et gauche ; il reçoit également des informations sur la vitesse VT du tracteur et en particulier la vitesse des roues motrices ; il reçoit encore des informations concernant les efforts FT au niveau de la liaison entre le tracteur et la charrue par le capteur 21 installé sur la tête d'attelage. Convenablement gérées, ces informations permettent la réalisation d'un contrôle automatique de l'assistance.

Le dispositif de commande 33 peut également recevoir des informations sur la vitesse réelle d'avancement par rapport au sol, de l'ensemble tracteur-machine. Ces informations VR peuvent provenir d'un système radar embarqué sur le tracteur ou la machine. Elles permettent au dispositif de commande 33 d'effectuer des corrections lorsqu'il détecte une différence entre la vitesse affichée par l'opérateur, servant de référence et la vitesse réelle de l'ensemble tracteur-machine par rapport au sol.

On remarque, sur le tableau synoptique de la figure 4, l'ensemble des éléments qui interviennent dans le fonctionnement de la motorisation. On a représenté les moteurs hydrauliques 18d et 18g alimentés par la pompe à débit variable 14. Les électro-vannes proportionnelles 31d et 31g sont interposées entre la pompe 14 et chacun des moteurs 18d et 18g respectivement. Le circuit hydraulique 35 permet également d'alimenter des organes annexes 36, à travers un distributeur 37, lesquels organes 36 sont par exemple constitués de vérins servant au retournement de la charrue, ou encore au déplacement latéral du bâti ou à son relevage.

On observe également, sur le circuit hydraulique 35, une dérivation pour, le cas échéant, alimenter le moteur hydraulique 18′ d'une charrue montée à l'avant du tracteur. Ce moteur 18′ est alimenté à travers une électro-vanne proportionnelle 31' du même type que les électro-vannes 31d et 31g.

Les électro-vannes 31d et 31g et, le cas échéant, 31′, sont alimentées à partir du dispositif de commande 33 de façon à pouvoir régler depuis la cabine du tracteur la puissance de l'assistance à délivrer au moyen de la motorisation auxiliaire constituée par les différents moteurs hydrauliques 18, 18′. Le dispositif de commande 33 comporte des moyens pour régler la valeur maximale de la tension électrique à fournir aux électro-vannes 31, 31′ en fonction de la décision prise par l'utilisateur.

Le dispositif de commande 33 permet ainsi d'établir une valeur maximum de la tension électrique de commande des électro-vannes 31. Ces électro-vannes 31 ont un débit proportionnel à la tension électrique qui leur est appliquée. Cette tension peut varier entre une valeur minimale correspondant à une quasi fermeture de l'électro-vanne et une valeur maximale qui correspond à une ouverture qui dépend de la volonté de l'utilisateur. On peut prévoir de faire varier cette valeur maximum en fonction d'une consigne calculée par un micro-ordinateur ou tout autre système intégré au dispositif de commande 33, en fonction d'informations qui lui sont fournies par les différents capteurs disposés sur l'ensemble tracteur-charrue.

Le dispositif de commande 33 est tout d'abord activé au moyen du capteur de profondeur 34 du type capteur digital ou capteur analogique. Ce capteur 34 envoie un signal dans le but de déterminer la position des socs par rapport à la terre. L'utilisation d'un capteur 34 de type analogique permet de mesurer avec précision la profondeur de travail de la charrue. Le signal envoyé par le capteur donnera, à travers le dispositif de commande 33, l'autorisation ou non de la mise en marche de l'assistance.

La commande séparée des moteurs hydrauliques 18, au moyen d'électro-vannes distinctes 31, permet de contrôler séparément chacune des roues du chariot et en particulier de régler leur vitesse pour éviter le patinage Le contrôle de patinage consiste en une action sur chaque électro-vanne, par un contrôle du débit d'alimentation des moteurs hydrauliques. Ce contrôle repose sur une analyse de la différence de vitesse relative entre les roues 5 du chariot et éventuellement de la roue 5′ de la charrue avant.

Ce système d'antipatinage s'apparente à un système de blocage de différentiel d'un essieu de véhicule quelconque dont les roues sont indépendantes.

Pour coordonner les vitesses des deux roues on peut utiliser des moteurs hydrauliques du type à deux étages moteur. L'un des étages moteur d'une roue est couplé hydrauliquement en série, avec l'étage moteur correspondant de l'autre roue. Cette liaison hydraulique peut être permanente ou temporaire. Dans le cas d'une liaison temporaire, on peut prévoir une mise en service automatique de l'accouplement sous l'action des capteurs de vitesse 32. L'accouplement hydraulique devenant actif dès qu'un écart de vitesse est décelé entre les deux roues 5d et 5g.

On a représenté, figure 5, de façon schématique, les éléments entrant dans la composition d'un autre système d'antipatinage 41. Ce système comporte deux lignes de traitement et d'analyse des signaux provenant des capteurs de vitesse 32d et 32g, et ces lignes de traitement et d'analyse sont de type croisées. On remarque en effet que le capteur gauche 32g est utilisé pour influencer l'électro-vanne proportionnelle droite 31d ; de la même façon, le capteur droit 32d influence l'électro-vanne proportionnelle gauche 31g.

Le capteur gauche 32g du type digital par exemple, placé sur le moteur gauche 18g envoie une impulsion binaire selon une fréquence proportionnelle à la vitesse de rotation de la roue gauche 18g à un optocoupleur gauche 42. Un compteur 43 compte les impulsions reçues par l'optocoupleur 42. Une mémoire 44 mémorise un mot de quatre bits par exemple provenant du compteur 43 et l'envoie à un convertisseur 45 du type digital analogique. L'utilisation d'optocoupleur, pour les différentes connexions, permet de supprimer les risques d'accrochage de signaux parasites.

De la même façon, entre le capteur 32d et l'électro-vanne 31g on trouve un optocoupleur 42, un compteur 43, une mémoire 44 et un convertisseur gauche 45.

Un circuit de traitement logique 46 connecté au compteur 43 et à la mémoire 44, réalise plusieurs fonctions. Ce circuit 46 autorise l'envoi des impulsions binaires de l'optocoupleur gauche 42 au compteur gauche 43 et, de la même façon, les impulsions de l'optocoupleur droit 42 au compteur droit 43.

Ce même circuit 46 interdit l'envoi des impulsions dans les compteurs 43 dès lors que l'un d'eux a reçu par exemple quatre impulsions. Le circuit 46 autorise l'envoi des mots de quatre bits par exemple aux mémoires 44 correspondant aux compteurs 43, et il envoie une impulsion de validation à chacune de ces mémoires 44. Ce circuit 46 remet ensuite à zéro les deux compteurs 43 et permet une nouvelle boucle comme décrite ci-dessus, pour charger les compteurs 43. Le premier des deux compteurs qui a reçu par exemple quatre impulsions, envoie un signal au circuit de traitement logique 46 pour interrompre l'envoi de nouvelles impulsions.

La mémoire qui n'a pas reçu le mot de quatre bits contenant quatre impulsions, envoie ledit mot au convertisseur 45 correspondant dès que le circuit logique 46 a autorisé le transfert dudit mot depuis le compteur et qu'il a validé ce transfert. Ce convertisseur 45 interprète le mot venant de la mémoire qui a été chargée et envoie une tension consigne à l'électro-vanne proportionnelle 31 correspondante qui commande le circuit d'alimentation des moteurs.

L'électro-vanne 31 qui alimente le moteur-roue 18 permet à la roue en question de conserver une vitesse normale si la tension de consigne correspond à l'ouverture maximale de l'électro-vanne ; la roue est freinée si la tension de consigne est inférieure à l'ouverture maximale, d'une façon qui est proportionnelle à l'écart de vitesse entre les deux roues pour ramener la roue la plus rapide à la vitesse de la roue la plus lente.

La remise à zéro des mémoires 44 peut également être réalisée à partir d'un signal provenant du détecteur de niveau 40. Ce détecteur de niveau peut également permettre un affichage du positionnement vertical des roues de la charrue et ainsi autoriser la descente de la charrue jusqu'à une profondeur de labour sélectionnée par l'utilisateur.

L'ensemble du système antipatinage 41 peut être mis en service et contrôlé au moyen d'un interrupteur avec voyant de contrôle disposé au niveau du poste de conduite. Cet ensemble antipatinage peut également permettre une assistance au freinage de l'ensemble tracteur-outil. Cette fonction freinage peut être déclenchée au moyen d'une alimentation connectée sur les feux de freinage du tracteur par exemple, afin de donner un signal. Un autre circuit de traitement logique, utilise le signal provenant du courant d'allumage des feux de freinage pour donner l'autorisation ou non de la mise en marche du circuit de freinage des moteurs hydrauliques 18 en envoyant selon le même mode que le circuit d'assistance, une tension consigne à une électro-vanne qui commande le circuit retour des moteurs roues.

## Revendications

1. Machine agricole du type charrue semi-portée comportant d'une part un dispositif d'assistance à l'entraînement, au moyen d'une motorisation auxiliaire alimentée par une centrale hydraulique munie d'une pompe (14) agencée pour être actionnée par un tracteur, laquelle motorisation consiste en au moins un moteur-roue hydraulique (18) alimenté à travers un organe distributeur (31), et d'autre part, des moyens de sécurité (34) pouvant agir sur la commande du dispositif d'assistance selon que la charrue est en position inactive en supprimant l'assistance ou en position active de labour, en autorisant l'assistance, caractérisée en ce que la commande du dispositif d'assistance est un dispositif électrique de commande et en ce que l'organe distributeur d'alimentation du moteur-roue hydraulique (18) est constitué d'une électrovanne recevant une tension électrique au moyen dudit dispositif électrique de commande (33), en fonction notamment de signaux émis par lesdits moyens de sécurité constitués d'un capteur (34) disposé sur le support moteur-roue hydraulique (18) et sensible à la position des socs de la charrue, par rapport à la terre.

2. Machine agricole selon la revendication 1, caractérisée en ce que le capteur (34) est un capteur de type digital ou analogique, disposé au niveau du support de la ou des roues motrices (5), fournissant des informations de distance, de position ou de profondeur.

3. Machine agricole selon la revendication 1, caractérisée en ce qu'elle comporte des moyens permettant de faire varier le débit et/ou la pression fourni par la pompe, et des moyens pour ajuster ce débit et/ou cette pression en fonction des ordres de l'utilisateur et/ou d'un dispositif de commande (33) qui tient compte de paramètres dépendant du comportement de l'ensemble tracteur-machine comme par exemple les efforts au niveau de la liaison tracteur-machine, la vitesse d'avancement par rapport au sol dudit ensemble, les vitesses de rotation des roues du tracteur et de la machine.

4. Machine agricole selon la revendication 3, caractérisée en ce qu'elle comporte au moins un capteur de transmission des efforts qui s'appliquent à la liaison tracteur-machine, dont les informations sont transmises au dispositif électrique de commande, lequel dispositif, en fonction du niveau de l'effort, comparé à trois plages d'effort pré-définies par l'utilisateur, comporte des moyens de commande pour : d'une part, mettre en oeuvre la fonction d'assistance par la motorisation auxiliaire lorsque le tracteur est actif et qu'il exerce un effort se situant à un niveau insuffisant pour faire progresser la machine, d'autre part, moduler la fonction d'assistance par la motorisation auxiliaire lorsque le tracteur est actif et exerce un effort se situant à un niveau suffisant pour faire progresser ladite machine, d'autre part encore, annuler ladite fonction d'assistance lorsque le tracteur est inactif, c'est-à-dire lorsqu'il exerce un effort de traction inférieur à un seuil pré-établi ou qu'il exerce un effort nul, voire que le tracteur est propulsé par ladite machine.

5. Machine agricole selon la revendication 3, caractérisée en ce qu'elle comporte, associés au dispositif électrique de commande (33), des moyens de contrôle de la vitesse réelle d'avancement de l'ensemble tracteur-machine, de façon à corriger le pourcentage d'écart entre une vitesse affichée par l'utilisateur, servant de référence, et la vitesse réelle dudit ensemble.

6. Machine agricole selon la revendication 5, caractérisée en ce qu'elle comporte des moyens de contrôle de la vitesse de l'ensemble tracteur-machine, qui consistent en un système radar embarqué sur ledit ensemble.

7. Machine agricole selon l'une quelconque des revendications 1 à 6, munie d'un chariot disposé sur la longueur du bâti, caractérisée en ce que chaque roue dudit chariot est munie d'un moteur hydraulique alimenté à travers une électro-vanne proportionnelle manoeuvrée par un système antipatinage (41) qui comporte des moyens pour ajuster la vitesse des deux roues en prenant comme référence la vitesse de la roue la plus lente.

8. Machine agricole selon la revendication 7, caractérisée en ce qu'elle comporte un système antipatinage (41) agissant sur l'une ou l'autre des électro-vannes des moteurs-roues en fonction d'informations fournies par des capteurs de vitesse (32) associés auxdits moteurs-roues (18).

9. Machine agricole selon la revendication 8, caractérisée en ce que le système antipatinage comprend des moteurs-roues (18) du type à deux étages moteur, l'un des étages d'une roue pouvant être couplé hydrauliquement à l'étage moteur correspondant de l'autre roue.

10. Machine agricole selon la revendication 8, caractérisée en ce que le système antipatinage comprend, d'une part, deux lignes d'analyse et de traitement des signaux des capteurs (32), et, d'autre part un circuit de traitement logique, chaque ligne en question est constituée : - d'un optocoupleur (42) relié au capteur d'un des moteurs-roues (18), - d'un compteur (43), - d'une mémoire (44) et d'un convertisseur (45), lequel convertisseur (45) agit sur l'électro-vanne (31) qui commande l'autre moteur-roue.

11. Machine agricole selon la revendication 7, caractérisée en ce qu'elle comporte, sur les retours des moteurs-roues (18), une électro-vanne proportionnelle manoeuvrée par un système de freinage dont le circuit est analogue à celui du système antipatinage, lequel est actionné en fonction d'un signal provenant du tracteur comme, par exemple, l'allumage des feux de freinage, afin d'assister le freinage de l'ensemble tracteur-machine.

12. Machine agricole selon l'une quelconque des revendications 1 à 11, caractérisée en ce qu'elle comporte des organes annexes alimentés directement par la centrale hydraulique de la motorisation auxiliaire, lesquels organes sont, par exemple, les vérins de retournement, de déport ou de relevage du bâti de la charrue.

## Claims

1. An agricultural machine such as a semi-mounted plough having an auxiliary drive unit on the one hand, using an auxiliary motorization supplied by a hydraulic power pack fitted with a pump (14) arranged in order to be actuated by a tractor, whereby the said motorization consists of at least one motor/hydraulic wheel (18) supplied by a distribution device (31) and, on the other hand, safety means (34) which can act on the control system of the auxiliary unit according to whether the plough is in inactive position, by suppressing the said auxiliary action or in active ploughing position, by authorising the auxiliary action, characterised in that the control system of the auxiliary unit is an electric control system and that the power supply distribution device of the motor-hydraulic wheel (18) consists of a solenoid valve receiving an electric voltage via the said electric control system (33), in relation notably to signals transmitted by the said safety means made of a sensor (34) arranged on the support of the engine-hydraulic wheel (18) and sensitive to the position of the shares of the plough with respect to the ground.

2. An agricultural machine according to claim 1, characterised in that the sensor (34) is a digital or analog-type sensor, arranged at the level of the support of the driving wheel(s) (5), supplying information on distance, position or depth.

3. An agricultural machine according to claim 1, characterised in that it contains means enabling to vary the flow rate and/or the pressure delivered by the pump and means to adjust the said flow rate and/or the said pressure according to the user's orders and/or to a control system (33) which takes into account parameters depending on the behaviour of the tractor-machine assembly such as for instance the loads in the tractor-machine connection, the advancement speed of the said assembly with respect to the ground, the rotation speeds of the tractor's and of the machine's wheels.

4. An agricultural machine according to claim 3, characterised in that it contains at least one load transmission sensor, which monitors the loads applied to the tractor-machine connection, whose information is transmitted to the electric control system, whereby the said system, in relation to the level of the load, compared with three load levels, pre-set by the user, contains control means in order to : on the one hand, implement the auxiliary function by the auxiliary motorization when the tractor is active and when it exercises a load of insufficient level to move the machine, on the other hand, modulate the auxiliary function by auxiliary motorization when the tractor is active and exercises a load of sufficient level to move the said machine and, still on the other hand, cancel the said auxiliary function when the tractor is inactive, i.e. when it exercises a tractor load lower than a pre-set threshold or when it exercises zero load, let alone when the tractor is propelled by the said machine.

5. An agricultural machine according to claim 3, characterised in that it contains, associated with the electric control system (33), means to control the actual advancement speed of the tractor-machine assembly, in order to correct the deviation percentage between a speed displayed by the user, used as a reference, and the actual speed of the said assembly.

6. An agricultural machine according to claim 5, characterised in that it contains means to control the speed of the tractor-machine assembly, which consist of an on-board radar system mounted on the said assembly.

7. An agricultural machine according to any of the claims 1 to 6, fitted with a cart arranged along the frame, characterised in that each wheel of the said cart is fitted with a hydraulic motor powered via a proportional solenoid valve, manoeuvred by an antiskid system (41) comprising means to adjust the speed of both wheels while taking as a reference the speed of the slowest wheel.

8. An agricultural machine according to claim 7, characterised in that it contains an antiskid system (41) acting on either solenoid valve of the motors-wheels in relation to information supplied by speed sensors (32) associated with the said motors-wheels (18).

9. An agricultural machine according to claim 8, characterised in that the antiskid system comprises motors-wheels (18) of the two-stage motor type, whereas one of the stages of a wheel can be coupled hydraulically to the corresponding motor stage of the other wheel.

10. An agricultural machine according to claim 8, characterised in that the antiskid system comprises, on the one hand, two lines dedicated to analyzing and processing the signals from the sensors (32) and, on the other hand, a logic processing circuit, whereas each line in question consists of : - an optocoupler (42) linked to the sensor of one of the motors-wheels (18) - a meter (43), - a memory (44) and a converter (45), whereas the said converter (45) acts on the solenoid valve (31) controlling the other motor-wheel.

11. An agricultural machine according to claim 7, characterised in that it contains, on the feedbacks of the motors-wheels (18) a proportional solenoid valve manoeuvred by a braking system whose circuit is analog to that of the antiskid system, the said circuit is actuated in relation to a signal coming from the tractor such as, for instance, the switching on of the braking lights, in order to assist the braking of the tractor-machine assembly.

12. An agricultural machine according to any of the claims 1 to 11, characterised in that it contains appended devices directly supplied by the hydraulic power pack of the auxiliary motorization, whereas the said devices are, for instance jacks for barring, offsetting or raising the frame of the plough.

## Patentansprüche

1. Landwirtschaftliche Maschine, wie Aufsattelpflug, einerseits bestehend aus einer Hilfsantriebsvorrichtung mit Hilfe einer Hilfsmotorisierung, die von einer Hydraulikstation gespeist wird, welche mit einer Pumpe (14) versehen ist, die derart angeordnet ist, daß sie von einem Schlepper betätigt wird, wobei diese Motorisierung aus mindestens einem hydraulischen Radantrieb (18) besteht, der über ein Verteilungsorgan (31) gespeist wird, und andererseits bestehend aus Sicherheitsmitteln (34), die auf die Steuerung der Hilfsvorrichtung einwirken können, indem der Hilfsantrieb ausgeschaltet wird, wenn sich der Pflug in der inaktiven Position befindet, oder indem in der aktiven Pflügeposition der Hilfsantrieb ermöglicht wird, dadurch gekennzeichnet, daß die Steuerung der Hilfsvorrichtung eine elektrische Steuereinrichtung ist und daß das Verteilungsorgan für die Speisung des hydraulischen Radantriebs (18) von einem Magnetventil gebildet wird, das eine elektrische Spannung mittels der elektrischen Steuereinrichtung (33) empfängt, insbesondere in Abhängigkeit von Signalen, die von den Sicherheitsmitteln ausgesandt werden, welche von einem Fühler (34) gebildet werden, der auf dem Träger des hydraulischen Radantriebs (18) angeordnet ist und zur Erfassung der Position der Pflugscharen in bezug zur Erde bestimmt ist.

2. Landwirtschaftliche Maschine nach Anspruch 1, dadurch gekennzeichnet, daß der Fühler (34) ein Digital- oder Analogfühler ist, der auf der Ebene des Trägers des oder der Antriebsräder (5) angeordnet ist und Informationen über Abstand, Position oder Tiefe liefert.

3. Landwirtschaftliche Maschine nach Anspruch 1, dadurch gekennzeichnet, daß sie Mittel umfaßt, die es ermöglichen, die von der Pumpe gelieferte Durchflußmenge und/oder den Druck zu variieren, und Mittel, um diese Durchflußmenge und/oder diesen Druck in Abhängigkeit von den Anweisungen des Benutzers und/oder einer Steuereinrichtung (33) anzupassen, welche Parameter berücksichtigt, die von dem Verhalten der Einheit Schlepper-Maschine abhängen, wie beispielsweise den Kräften im Bereich der Verbindung Schlepper-Maschine, der Vorschubgeschwindigkeit der Einheit in bezug auf den Boden, den Drehgeschwindigkeiten der Räder des Schleppers und der Maschine.

4. Landwirtschaftliche Maschine nach Anspruch 3, dadurch gekennzeichnet, daß sie zumindest einen Fühler für die Übertragung der Kräfte, welche auf die Verbindung Schlepper-Maschine einwirken, umfaßt, dessen Informationen auf die elektrische Steuereinrichtung übertragen werden, wobei diese Einrichtung in Abhängigkeit von dem Kraftbereich, verglichen mit drei Kraftstufen, die vom Benutzer vordefiniert wurden, Steuermittel umfaßt, um: einerseits die Hilfsfunktion durch die Hilfsmotorisierung einzusetzen, wenn der Schlepper aktiv ist und eine Kraft ausübt, die sich in einem Bereich befindet, der nicht ausreicht, um die Maschine vorwärtszubewegen, andererseits die Hilfsfunktion durch die Hilfsmotorisierung zu modulieren, wenn der Schlepper aktiv ist und eine Kraft ausübt, die sich in einem Bereich befindet, der ausreicht, um die Maschine vorwärtszubewegen, andererseits auch diese Hilfsfunktion stillzulegen, wenn der Schlepper inaktiv ist, d.h. wenn er eine Zugkraft ausübt, die unter einer vordefinierten Schwelle liegt oder wenn er keine Kraft ausübt bzw. der Schlepper von der Maschine angetrieben wird.

5. Landwirtschaftliche Maschine nach Anspruch 3, dadurch gekennzeichnet, daß sie angeschlossen an die elektrische Steuereinrichtung (33) Mittel zur Kontrolle der tatsächlichen Vorschubgeschwindigkeit der Einheit Schlepper-Maschine umfaßt, um den Prozentsatz der Abweichung zwischen einer vom Benutzer angezeigten Geschwindigkeit, die als Referenz dient, und der tatsächlichen Geschwindigkeit der Einheit zu korrigieren.

6. Landwirtschaftliche Maschine nach Anspruch 5, dadurch gekennzeichnet, daß sie Mittel zur Kontrolle der Geschwindigkeit der Einheit Schlepper-Maschine umfaßt, die aus einem auf dieser Einheit angebrachten Radarsystem bestehen.

7. Landwirtschaftliche Maschine nach einem der Ansprüche 1 bis 6, die mit einem Wagen versehen ist, der auf der Länge des Gehäuses angeordnet ist, dadurch gekennzeichnet, daß jedes Rad des Wagens mit einem Hydraulikmotor versehen ist, der über ein proportionales Magnetventil gespeist wird, das durch ein Antirutschsystem (41) gesteuert wird, welches Mittel zur Anpassung der Geschwindigkeit der beiden Räder umfaßt, wobei als Referenz die Geschwindigkeit des langsamsten Rades herangezogen wird.

8. Landwirtschaftliche Maschine nach Anspruch 7, dadurch gekennzeichnet, daß sie ein Antirutschsystem (41) umfaßt, das auf ein oder mehrere Magnetventile der Radantriebe in Abhängigkeit von Informationen einwirkt, die von Geschwindigkeitsfühlern (32), welche mit den Radantrieben (18) verbunden sind, geliefert werden.

9. Landwirtschaftliche Maschine nach Anspruch 8, dadurch gekennzeichnet, daß das Antirutschsystem Radantriebe (18) mit zwei Antriebsstufen umfaßt, wobei die eine der Stufen hydraulisch an die entsprechende Antriebsstufe des anderen Rades gekoppelt werden kann.

10. Landwirtschaftliche Maschine nach Anspruch 8, dadurch gekennzeichnet, daß das Antirutschsystem einerseits zwei Leitungen zur Analyse und Verarbeitung der Signale der Fühler (32) und andererseits einen logischen Verarbeitungskreis umfaßt, wobei jede betreffende Leitung gebildet wird von: - einem optoelektronischen Koppelelement (42), das an den Fühler eines der Radantriebe (18) angeschlossen ist, - einem Zähler (43), - einem Speicher (44) und einem Umwandler (45), wobei der Umwandler (45) auf das Magnetventil (31), das den anderen Radantrieb steuert, einwirkt.

11. Landwirtschaftliche Maschine nach Anspruch 7, dadurch gekennzeichnet, daß sie auf den Rückleitungen der Radantriebe (18) ein proportionales Magnetventil umfaßt, das von einem Bremssystem gesteuert wird, dessen Kreis jenem des Antirutschsystems gleich ist, welches in Abhängigkeit von einem Signal betätigt wird, das von dem Schlepper kommt, wie beispielsweise das Aufleuchten der Bremslichter, um das Bremsen der Einheit Schlepper-Maschine zu unterstützen.

12. Landwirtschaftliche Maschine nach einem der Ansprüche 1 bis 11, dadurch gekennzeichnet, daß sie Zusatzorgane umfaßt, die direkt durch die Hydraulikstation der Hilfsmotorisierung gespeist werden, wobei diese Organe beispielsweise Zylinder für das Kippen, Verschieben oder Anheben des Pfluggehäuses sind.
